# EUROPEAN PATENT APPLICATION

(11) **EP 4 488 705 A1**
(43) Date of publication of application: **08.01.2025**
(21) Application number: 23184233.7
(22) Date of filing: 07.07.2023
(51) Int. Cl.: G01S 5/02, G06N 20/00, G01S 5/16, G01S 5/18

(54) **ASSET LOCATING METHOD**

(71) Applicant: Nagravision Sàrl, 1033 Cheseaux-sur-Lausanne (CH)
(72) Inventor: BAHROUN, Aymen, 1033 Cheseaux-sur-Lausanne (CH); FENDRI, Hedi, 1033 Cheseaux-sur-Lausanne (CH); LAHLOU, Lamyae, 1033 Cheseaux-sur-Lausanne (CH); GRADASSI, Luca, 1033 Cheseaux-sur-Lausanne (CH)
(74) Representative: Mewburn Ellis LLP

(57) **Abstract**

A method for training a machine learning model for locating an asset in an environment when the machine learning model is executed on a computer system. The method comprises receiving data corresponding to a plurality of training signals. The plurality of training signals are received at a plurality of receivers from a plurality of training tags located in the environment. The environment has a plurality of zones, and each of the training tags is associated with a zone in which it is located. The method further comprises generating training data for a first zone of the plurality of zones, wherein the training data for the first zone includes values of the training signals received from training tags located in the first zone, each value associated with the receiver at which a respective training signal was received. The method further comprises generating training data for a second zone of the plurality of zones, wherein the training data for the second zone includes values of the training signals received from training tags located in the second zone, each value associated with the receiver at which a respective training signal was received. The method further comprises training, using the training data for the first zone and the training data for the second zone, a machine learning model to output a zone as a determined location of an asset in the environment based on an input which includes data corresponding to one or more signals received at one or more receivers from a tag associated with the asset.

## Description

### Field of the Invention

The present invention relates to a method for training a machine learning model for locating an asset in an environment. The present invention also relates to a method for locating an asset in an environment and particularly, although not exclusively, to a method for locating an asset in an environment using machine learning techniques.

### Background

In many environments, there is a need to efficiently locate an asset in the environment. For example, in an indoor environment, such as a warehouse, there may be multiple assets (e.g., objects) in the indoor environment and the correct asset may need to be found quickly.

Conventionally, humans were tasked with finding the correct asset in an environment such as a warehouse. Often, they did not know where the assets were, and so had to search the environment until they found the correct asset. Sometimes, maps of the environment, which mapped the location of different assets in the environment, could be used. The user could then follow the map to locate the required asset. However, this approach is labour intensive, and thus inefficient.

It is known to track assets using GPS (Global Positioning System). A GPS tag positioned on the asset communicates with relevant satellites such that the asset can be located wherever they are positioned around the world. GPS provides live tracking of assets, and is thus especially useful for tracking assets in transit, such as rental cars. However, GPS tracking can be costly to implement, especially in a warehouse or indoor environment. Furthermore, GPS tracking of assets cannot provide an accurate or precise location in an indoor environment such as a warehouse. For example, GPS trackers may only be accurate to approximately >6m. In an indoor environment, although the GPS tracking may find an approximate location of the asset, a human would still need to manually search for and find the asset within that area. This leads to inefficient asset location. GPS tracking can also be costly to implement in some situations.

It is also known to use radio frequency (RF) technology to locate assets in an environment. In particular, a radio frequency tag may be positioned on the asset, and the location of the asset may be determined based on Relative Signal Strength Indicator (RSSI) values measured by a plurality of receivers, and using a positioning algorithm such as trilateration or Time Difference of Arrival (TDOA) techniques. Bluetooth Low Energy (BLE) or Near Field Communication (NFC) technology may be used to locate assets in this way. Although these approaches are less costly than GPS, they are still not precise or accurate enough to provide efficient location of assets in an indoor environment such as a warehouse.

This lack of accuracy of the RF technology techniques results from the assumption that RF propagation is in free space, without obstacles. However, in reality, there are often objects such as furniture, walls, and/or people in the environment, which impact radio signal propagation due to diffraction, reflection and/or scattering of the RF signals. This is known as RF multipath propagation/interference, and is particularly prevalent in indoor environments.

Multipath interference occurs when an RF signal arrives at a receiver via two or more routes. This results in the total length of each signal path, and thus the time delay and phase of each received signal, to be different. This can lead to the two or more signals arriving in phase or out of phase, depending on the paths taken, meaning the signal power (RSSI) increases or decreases depending on the path taken. For stationary assets at a fixed location in a fixed environment, the multipath interference will be substantially constant over time when the assets' signals are measured from a given point in space, leading to large errors in the location measurement, and thus reduced accuracy.

These RF propagation limitations can result in conventional location algorithms, such as BLE RSSI and trilateration, having a low locations precision of 5-10m. In order to improve the accuracy of the location measurement, the number of receivers used to measure RSSI values from a radio frequency tag can be increased. However, such techniques still result in limited accuracy, and involve a complex deployment often with a vast quantity of receivers.

The present invention has been devised in light of the above considerations.

### Summary of the Invention

According to a first aspect, there is provided a method for training a machine learning model for locating an asset in an environment when the machine learning model is executed on a computer system, the method comprising:
receiving data corresponding to a plurality of training signals, wherein the plurality of training signals are received at a plurality of receivers from a plurality of training tags located in the environment, the environment having a plurality of zones, and wherein each of the training tags is associated with a zone in which it is located;
generating training data for a first zone of the plurality of zones, wherein the training data for the first zone includes values of the training signals received from training tags located in the first zone, each value associated with the receiver at which a respective training signal was received;
generating training data for a second zone of the plurality of zones, wherein the training data for the second zone includes values of the training signals received from training tags located in the second zone, each value associated with the receiver at which a respective training signal was received; and
training, using the training data for the first zone and the training data for the second zone, a machine learning model to output a zone as a determined location of an asset in the environment based on an input which includes data corresponding to one or more signals received at one or more receivers from a tag associated with the asset.

In this way, the machine learning model is trained to determine the location of the asset as being in a particular zone in the environment based on training data collected from the environment itself. This reduces the impact of multipath interference by leveraging previous data collected from the environment. Machine learning techniques can therefore be employed to more accurately locate a required asset as being in a particular zone in the environment.

The trained machine learning model can thus be used to determine a precise location of a required asset in the environment. In e.g., a warehouse environment, an operator is thus able to efficiently locate the required asset in the environment.

Optional features will now be set out. The following optional features are combinable singly or in any combination with any aspect of the invention.

The environment may be an inside space, such as one or more rooms, or a warehouse, for example. The environment may be (part of) a hospital, an office building, an airport, a hangar, a factory, a manufacturing plant, a big-box store, a distribution warehouse, a fabrication plant, a campus (e.g., office, school, university, etc.) a mall/shopping centre, hotel, a server farm, or the like, for example.

The environment may be an outside space, e.g., a carpark.

The tag associated with the asset may be positioned on or adjacent to the asset. For example, if the environment is a warehouse, the tag may be positioned on a pallet containing the asset, or a shelf upon which the asset is positioned.

The training signals may comprise electromagnetic wave signals. For example, the training signals may comprise radio-frequency, RF, signals. RF signals may be electromagnetic signals including radio waves with frequencies of 300GHz and below. For example, a RF signal may include one or more electromagnetic waves in the frequency range from (approximately) 20kHz to 300GHz.

Alternatively/additionally, the training signals may comprise visual waves (e.g. electromagnetic waves in the frequency range from approximately 400THz - 800THz), infrared waves (e.g., electromagnetic waves in the frequency range from approximately 300GHz - 400THz), and/or ultraviolet waves (e.g., electromagnetic waves in the frequency range from approximately 800THz - 30PHz).

Alternatively/additionally, the training signals may comprise pressure wave signals, such as sound wave signals.

The data corresponding to the training signals may comprise, for each training signal, the value of the training signal, information identifying the training tag from which the training signal was received, and information identifying the receiver at which the training signal was received.

The data corresponding to the training signals may include a time stamp at which the training signal was received at the receiver and/or a time stap at which the training signal was transmitted from the training tag.

The values of the training signals may be the strengths of, e.g., values of the power present in, the training signals.

The values of the training signals may be values of Received Signal Strength Indicator (RSSI values). RSSI may be understood as a measurement of the power present in a received (e.g., radio) signal.

Bluetooth Low Energy (BLE) technology may be used to determine RSSI, for example.

The training signals may be received at the plurality of receivers during a predefined scanning period. The predefined scanning period may depend on a reporting interval of the receivers. For a reporting interval of e.g., 10 seconds, the predefined scanning period may be 5 minutes, for example. The predefined scanning period may be between 2 and 10 minutes, more preferably between 4 and 6 minutes, more preferably approximately 5 minutes, for example.

The training tags are preferably static (e.g., at a fixed location) in the environment during (e.g., for the duration of) the predefined scanning period.

The receivers may be located in the environment.

The receivers are preferably static during (e.g., for the duration) of the predefined scanning period.

The received data corresponding to the training signals may comprise a plurality of sets of data corresponding to training signals, each set comprising data corresponding to a plurality of training signals received from a respective training tag at a respective receiver.

In other words, a particular receiver may receive a plurality of training signals from a same training tag during the scanning period. These training signals, and in particular the values (e.g., RSSI values) from the same training tag may be different over the predefined scanning period, even if both the training tag and the receiver are stationary (e.g., static) in the environment. This may be due to multipath interference, e.g., diffraction, reflection or scattering resulting from objects (e.g., people) moving in the environment, errors introduced by transmission from multiple training tags at the same time, and/or errors introduced by the receiver antenna.

To reduce the effect of multipath interference and noise, the method may comprise filtering the data corresponding to the plurality of training signals received at the receivers.

Filtering the data corresponding to the plurality of training signals may comprise selecting, from each set of data corresponding to the training signals, data corresponding to the training signal with the maximum value in that set; and discarding the data corresponding to the other training signals. The greater the RSSI value, the stronger the signal. The RSSI values may be represented in a negative form (e.g., between -100 and 0), and in the negative form, the closer the value is to 0, the stronger the received signal.

For example, for a first set of data corresponding to the training signals received from a first training tag at a first receiver (during the predefined scanning period), the data corresponding to the training signal with the maximum value may be selected; and the data corresponding to the other training signals in the first set of training signals received from the first training tag at the first receiver may be discarded. This filtering process may be applied to each set of data corresponding to the training signals from each tag/receiver pair.

The filtering step may be performed before the training data is processed, for example.

Preferably, multiple training tags are located in the first and second zones (and preferably each zone of the plurality of zones).

The plurality of training tags in each zone may be evenly spaced over the respective zones. In these examples, there may not necessarily be the same number of training tags in each zone, but the plurality of training tags in each zone are evenly spaced over that zone. Alternatively, there may be the same or similar number of training tags in each zone. In such examples, the plurality of training tags may be evenly spaced over all the zones.

The more training tags provided in the first and second zones (and preferably each zone of the plurality of zones), the more accurate the trained machine learning model will be at predicting zone location of the required asset. The better spread over the zone the training tags are located, the more accurate the trained machine learning model will be at predicting zone location of the required asset.

The method may comprise generating training data for each of the plurality of zones, in accordance with the methods described herein (e.g., as described above in relation to the first and second zones). Accordingly, the method may comprise generating training data for each zone of the plurality of zones, wherein the training data for each zone comprises values of the training signals received from training tags located in a respective zone, each value associated with the receiver at which it was received. The method may then comprise training the machine learning model using the training data for each zone.

For completeness, as used herein the machine learning model may comprise one or more machine learning algorithms. The machine learning algorithm(s) may be configured to use or exploit data for classification and regression analysis.

The training signals received from training tags located in the first zone and the training signals received from training tags located in the second zone may be received by the receivers in the same predefined scanning period (e.g., at the same time). In these examples, the training tags located in the first and second zones may transmit the signals within the same predefined period.

Alternatively, the training signals received from training tags located in the first zone and the training signals received from training tags located in the second zone may be received by the receivers at different times. In these examples, the training tags located in the first and second zones may transmit the signals at different times (e.g., within different sampling periods). In some examples, the training tags located in the first and second zones may transmit the signals in sequence.

The method may be computer-implemented. For example, the steps of the above-described method (e.g., receiving the data corresponding to the plurality of training signals, generating the training data for the first and second zones, and training the machine learning model) may be performed at one or more processors. The one or more processors may be located at a remote computing device or server (e.g., outside of the environment), for example.

In some examples, the, or one or more (or all) of the processor(s) used to perform the steps of generating training data for the zones, and training the machine learning model, may be located in the environment (e.g., in the warehouse, hospital or airport).

The method may further comprise the step of receiving, at the plurality of receivers, the plurality of training signals from the plurality of training tags located in the environment. As such, the method may comprise transmitting (from the plurality of receivers) to one or more processors, e.g., to a remote server, data corresponding to the training signals received at the plurality of receivers.

The training signals received at the one or more receivers may be received by sampling continuous signals transmitted from the training tags. In these examples, each tag may transmit a constant continuous signal (e.g., of a fixed value, frequency, amplitude, and/or having at least one (e.g., RF) characteristic that remains constant). In some examples, the continuous signals transmitted from the training tags may not be constant continuous signals (e.g., the value/amplitude/frequency of the signals may change over time).

In some examples, each training tag may be associated with a unique identifier (e.g., a value) such that it can be identified from other training tags. The training tags can then transmit their respective identifier to its (RF) front end in a loop, where it may be encoded and/or modulated before being transmitted on a given frequency. In these examples, a continuous signal may be considered a signal that maintains at least one (RF) characteristic constant (e.g., encoding, modulation, frequency etc.), and thus maintains a constant (radio) protocol, and that continually transmits the same value (e.g., its unique identifier) in a loop. In some examples, the (RF) protocol may vary the modulation or frequency over time.

In some examples, each training tag may not transmit a unique identifier, but may instead transmit a continuous tone (e.g., at a constant pitch), which does not carry information but that is transmitted with a predefined modulation (e.g., amplitude modulation) at a predefined frequency.

In some examples, the training signals received from the training tags may comprise a plurality of discrete (e.g., non-continuous) signals transmitted from each training tag. In other words, the training tags may transmit discrete signals, rather than continuous signals. The training signals may be transmitted periodically or aperiodically from the training tag. The training tags may transmit discrete training signals of a constant value/amplitude. Alternatively, the training tags may transmit training signals of non-constant value/amplitude.

The method may further comprise splitting the training data for the first and second zones into a training set and a testing set. The training set may comprise the majority of the training data. For example, the training set may comprise the training data for 80% of the training tags in the first and second zones, and the testing set may comprise the training data for 20% of the training tags in the first and second zones.

The machine learning model may then be trained using the training set. After the machine learning model is trained, the machine learning model may be tested using the testing set.

If, during the testing of the trained machine learning model, the trained machine learning model predicts the zone location of the training tags in the testing set to an accuracy of above a predefined threshold, the trained machine learning model may be validated for use (e.g., published for use).

If, during the testing of the trained machine learning model, the trained machine learning model predicts the zone location of the training tags in the test set to an accuracy below a predefined threshold accuracy, the trained machine learning model may be invalidated. The trained machine learning model may then be retrained using the methods taught herein using further training data, which may be from an additional data collection.

The method may comprise, prior to generating the training data, and after receiving the data, performing a data sanity check on values of the received signals. This may include comparing values of the received signals to one or more predefined criteria. In some examples, the method may only proceed to the steps of generating the training data, if the values of the received signals meet the one or more predefined criteria. In this way, the data quality (e.g., correctness and consistency) is validated.

Generating the training data for the first zone may comprise generating a plurality of first zone arrays of the values of the training signals received from training tags located in the first zone, each first zone array including values of the training signals received from a different respective receiver of the plurality of receivers. Accordingly, a plurality of first zone arrays may be constructed, the data values in each first zone array corresponding to values of the training signals received from different receivers. For these first zone arrays, the different receivers which received the training signals may not necessarily be located in the first zone, but the training tags which transmitted the training signals are located in the first zone.

Optionally, generating the training data for the first zone may comprise, if one of the receivers has not received any training signals from a training tag located in the first zone, assigning a minimum observed value to the first zone array corresponding to that receiver. The minimum observed value may be predefined. For example, for RSSI values, the minimum observed value may be between -95 and - 105dBm (which may depend on the quality of the receiver antenna).

Each first zone array may include the values of all of the training signals received from training tags located in the first zone at the respective receiver.

Generating the training data for the first zone may further comprise generating an Nx1 first zone array, wherein N is the number of receivers, and each value in the Nx1 first zone array is a value of a training signal received from a training tag located in the first zone at each different receiver.

Each value in the Nx1 first zone array may be randomly selected from the values in the respective first zone array corresponding to the respective receiver. As such, the Nx1 first zone array may contain a single value of a training signal received from a training tag in the first zone, for each receiver.

The training data for the first zone used to train the machine learning model may then comprise this Nx1 first zone array.

Generating the training data for the second zone may comprise a similar process to as described above for the training data for the first zone. In particular, generating the training data for the second zone may comprise generating a plurality of second zone arrays of the values of the training signals received from training tags located in the second zone, each second zone array including values of the training signals received from a different respective receiver of the plurality of receivers. Accordingly, a plurality of second zone arrays may be constructed, the data values in each second zone array corresponding to values of the training signals received from different receivers. For these second zone arrays, the different receivers (which may be the same receivers used for the first zone, and other zones) which received the training signals may not necessarily be located in the second zone, but the training tags which transmitted the training signals are located in the second zone.

Optionally, generating the training data for the second zone may comprise, if one of the receivers has not received any training signals from a training tag located in the second zone, assigning a minimum observed value to the second zone array corresponding to that receiver. The minimum observed value may be predefined. For example, for RSSI values, the minimum observed value may be -95.

Each second zone array may include the values of all of the training signals received from training tags located in the second zone at the respective receiver.

Generating the training data for the second zone may further comprise generating an Nx1 second zone array, wherein N is the number of receivers, and each value in the Nx1 second zone array is a value of a training signal received from a training tag located in the second zone at each different receiver.

Each value in the Nx1 second zone array may be randomly selected from the values in the respective second zone array corresponding to the respective receiver. As such, the Nx1 second zone array may contain a single value of a training signal received from a training tag in the second zone, for each receiver.

The training data for the second zone used to train the machine learning model may then comprise this Nx1 second zone array.

Accordingly, the machine learning model may be trained using the Nx1 first zone array and the Nx1 second zone array.

As mentioned above, the method may comprise generating training data for each of the plurality of zones, in accordance with the methods described herein (e.g., as described above in relation to the first and second zones). This may result in an Nx1 array for each zone. The Nx1 array for each zone may be used as the training data for training the machine learning model.

The machine learning model may comprise one or more support vector machine models (SVMs), also known as support vector networks. The SVM model(s) may be trained with a radial basis function (RBF) kernel. The SVM slack (C) may be tuned, e.g., by trial and error. The method may further comprise tracking the machine learning model, and determining hyperparameters, artifacts and performance of the machine learning model.

The method may further comprise a trained machine learning model validation step. This may comprise testing the trained machine learning model on a sample input including one or more signals received at one or more of the receivers from a sample tag; testing a previous machine learning model on the same sample input, and determining if a prediction accuracy of the trained machine learning model is higher than a prediction accuracy of the previous machine learning model. If the prediction accuracy of the trained machine learning model is higher than the prediction accuracy of the previous machine learning model, the previous machine learning model may be replaced by the trained machine learning model. The trained machine learning model may then be used for locating an asset in the environment. Accordingly, the method may further comprise deploying the trained machine learning model for use in locating an asset in the environment (e.g., on the Cloud).

If the prediction accuracy of the trained machine learning model is lower than the prediction accuracy of the previous machine learning model, the previous machine learning model is maintained (e.g., the previous machine learning model is the used for locating an asset in the environment, and the trained machine learning model may be discarded).

According to a second aspect, there is a provided a system configured to perform the method of the first aspect.

As such, there is provided a system for training a machine learning model for locating an asset in an environment, the system comprising one or more processors, and memory storing thereon instructions that, as a result of being executed by the one or more processors, cause the system to:
receive data corresponding to a plurality of training signals, wherein the plurality of training signals are received at a plurality of receivers from a plurality of training tags located in the environment, the environment is defined by a plurality of zones, and each of the training tags is associated with a zone of the plurality of zones in which it is located;
generate training data for a first zone of the plurality of zones, wherein the training data for the first zone comprises values of the training signals received from training tags located in the first zone, each value associated with the receiver at which it was received;
generate training data for a second zone of the plurality of zones, wherein the training data for the second zone comprises values of the training signals received from training tags located in the second zone, each value associated with the receiver at which it was received; and
train, using the training data for the first zone and the training data for the second zone, a machine learning model to output a zone as a determined location of an asset in the environment based on an input including data corresponding to one or more signals received at one or more receivers from a tag associated with the asset.

The one or more processors and/or the memory may be located at a remote computing device or server (e.g., outside of the environment). The one or more processors and/or the memory may be located within the environment.

The system may further comprise the plurality of receivers configured to receive the plurality of training signals from the plurality of training tags. The plurality of receivers may be located in the environment.

The system may further comprise the plurality of training tags located in the environment. The training tags may comprise active tags (e.g. the training tags may use a power source, e.g., a battery power source, to broadcast the training signals) and/or passive tags (e.g., the tags may not have their own power source but may transmit the training signals in response to receiving (e.g., radio frequency) energy from one or more of the receivers and/or from another transmitter.

According to a third aspect, there is provided a non-transitory computer-readable storage medium, storing thereon executable instructions that, as a result of being executed by one or more processors of a computer system, cause the computer system to perform the method of the first aspect.

According to a fourth aspect, there is provided a method for locating an asset in an environment, the method comprising:
training a machine learning model to locate an asset in the environment;
receiving data corresponding to one or more signals received at one or more receivers from a tag associated with the asset;
inputting the data corresponding to the one or more signals receiver from the tag into the trained machine learning model; and
determining, based on the output of the trained machine learning model, a zone in the environment as the determined location of the asset in the environment.

The step of training the machine learning model may be performed using the method of the first aspect.

Accordingly, there is provided a method for locating an asset in an environment, the method comprising:
training a machine learning model in accordance with the method of the first aspect;
receiving data corresponding to one or more signals received at one or more receivers from a tag associated with the asset;
inputting the data corresponding to the one or more signals received from the tag into the trained machine learning model; and
determining, based on the output of the trained machine learning model, a zone in the environment as the determined location of the asset in the environment.

The tag associated with the asset may be positioned on or adjacent to the asset. For example, if the environment is a warehouse, the tag may be positioned on a pallet containing the asset, or a shelf upon which the asset is positioned.

The one or more signals received from the tag associated with the asset may comprise electromagnetic wave signals. For example, the one or more signals may comprise radio-frequency, RF, signals.

Alternatively/additionally, the one or more signals may comprise visual waves (e.g. electromagnetic waves in the frequency range from approximately 400THz - 800THz), infrared waves (e.g., electromagnetic waves in the frequency range from approximately 300GHz - 400THz), and/or ultraviolet waves (e.g., electromagnetic waves in the frequency range from approximately 800THz - 30PHz).

Alternatively/additionally, the one or more signals may comprise pressure wave signals, such as sound wave signals.

The data corresponding to the one or more signals received from the tag may comprise, for each signal, the value of the signal, and information identifying the receiver at which the signal was received. The value of the signal may be RSSI values, for example. BLE technology may be used to determine RSSI, for example.

The method of the fourth aspect may comprise the step of receiving, at the one or more receivers, one or more signals from the tag associated with the asset.

The one or more signals received at the one or more receivers may be received by sampling continuous signals transmitted from the tag associated with the asset (similarly to as described above in relation to the training tags).

In some examples, the tag associated with the asset may be associated with a unique identifier (e.g., a value) such that it can be identified from other tags (which may be associated with other assets). The tags can then transmit their respective identifier to its (RF) front end in a loop, where it may be encoded and/or modulated before being transmitted on a given frequency. In these examples, a continuous signal may be considered a signal that maintains at least one (RF) characteristic constant (e.g., encoding, modulation, frequency etc.), and thus maintains a constant (radio) protocol, and that continually transmits the same value (e.g., its unique identifier) in a loop. In some examples, the (RF) protocol may vary the modulation or frequency over time.

In some examples, the tag may not transmit a unique identifier, but may instead transmit a continuous tone (e.g., at a constant pitch), which does not carry information but that is transmitted with a predefined modulation (e.g., amplitude modulation) at a predefined frequency.

In some examples, the one or more signals received from the tag associated with the asset may comprise a plurality of discrete (e.g., non-continuous) signals transmitted the tag (similarly to as described above in relation to the training tags).

A plurality of assets may be located in the environment, and the method of the fourth aspect may be for locating an asset from the plurality of assets in the environment. Each of the plurality of assets may be associated with a respective tag, wherein the respective tag may be positioned on or adjacent to its corresponding asset.

The same receivers may receive the training signals and the one or more signals from the tag associated with the asset.

According to a further aspect, there is a provided a system configured to perform the method of the fourth aspect. As such, there is provided a system for locating an asset in an environment, the system comprising one or more processors, and memory storing thereon instructions that, as a result of being executed by the one or more processors, cause the system to perform the method of the fourth aspect.

According to a further aspect, there is provided a non-transitory computer-readable storage medium, storing thereon executable instructions that, as a result of being executed by one or more processors of a computer system, cause the computer system to perform the method of the fourth aspect.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
**Figure 1** is a schematic illustration of an example open environment in which the location of an asset is to be determined;
**Figure 2** is a schematic illustration of an example indoor environment with a plurality of obstacles;
**Figure 3** is a flow diagram of a localization framework for predicting the location of a required asset;
**Figure 4** is an example a machine learning model deployment pipeline for training and deploying a machine learning model for predicting the location of a required asset;
**Figure 5** is a flow diagram of a method for training a machine learning model to predict the location of a required asset in the environment;
**Figure 6** is an example file of raw data collected in the method for training machine learning model to predict the location of a required asset in the environment; and
**Figure 7** is a data preparation process for preparing an input for training a machine learning model to predict the location of a required asset in the environment.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

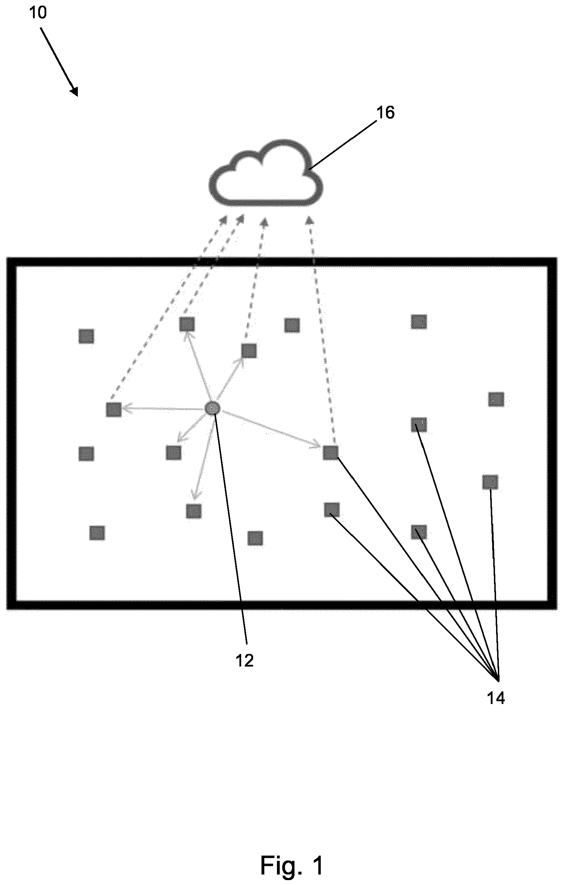

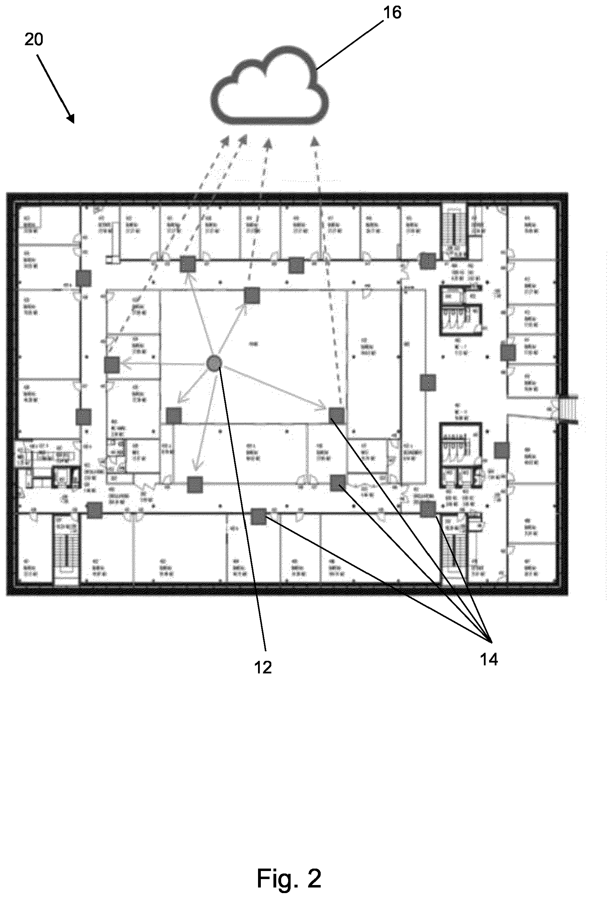

Radio frequency (RF) technology can be used to locate an asset from a plurality of assets in an environment 10, see e.g. Figure 1. The environment may be an inside or outside environment. It may be one or more rooms in a building (see e.g., the environment 20 in Figure 2). The environment may be a warehouse storing a plurality of assets, for example. It may be at least part of a hospital, an office building, an airport, a station, a hangar, a factory, a manufacturing plant, a big-box store, a distribution warehouse, a fabrication plant, a campus (e.g., office school, university, etc.), a mall/shopping centre, a hotel, carpark, or server farm, for example.

The environment may have a plurality of zones, which may be predefined as distinct areas within the environment.

A tag 12 can be assigned to each asset in the environment 10. Each tag 12 may be positioned on, adjacent to, or near its respective asset. As such, by determining a location of the tag, the location of the asset itself can be inferred by considering the location of the tag 12 to be equivalent to the location of the asset.

To determine the location of the asset in the environment, signals from the tags are received by a plurality of receivers 14, or gateways, positioned in the environment 10. The tags may be active tags having their own power source / battery to broadcast signals. The tags may be passive tags which do not have their own power source, but which transmit signals in response to receiving energy from one or more receivers/transm itters/transceivers.

The tags 12 may be radio frequency tags, e.g., Bluetooth Low Energy (BLE) tags. In these examples, the tag 12 may periodically transmit a same signal, or "packet", on three advertisement channels, in accordance with standard BLE protocol. The receivers may periodically receive the advertisement packets on at least one of the three advertisement channels.

A Received Signal Strength Indicator (RSSI) of each packet received from the tag 12 at a plurality of receivers 14 may be recorded. The RSSI is a measurement of the power present in a received radio signal, and is indicative of a distance between the tag 12 and the receiver 14 which received the signal from the tag 12.

The RSSI measurements may be sent to an external server 16, e.g., a cloud positioning server. An external server may be a server external to the environment. A positioning algorithm executing at the external server 16 may then use trilateration, triangulation or Time Difference of Arrival (TDOA) techniques to locate the tag 12. To have an accurate position estimation of the tag 12, these algorithms may assume that RF propagation is in free space without obstacles, such as in the open indoor environment 10 shown in Figure 1.

However, often there are obstacles such as walls, furniture and/or people who may be stationary or moving in the environment which impacts the RF propagation in the space. Figure 2 shows such an environment 20 including obstacles such as walls. These obstacles may impact the radio signal propagation due to diffraction, reflection and/or scattering, causing RF multipath interference/fading.

To reduce the effect of RF multipath interference, machine learning techniques can be used. Accordingly, the prediction of the location of a required asset 12 in a particular zone of the environment 10, 20 can be improved.

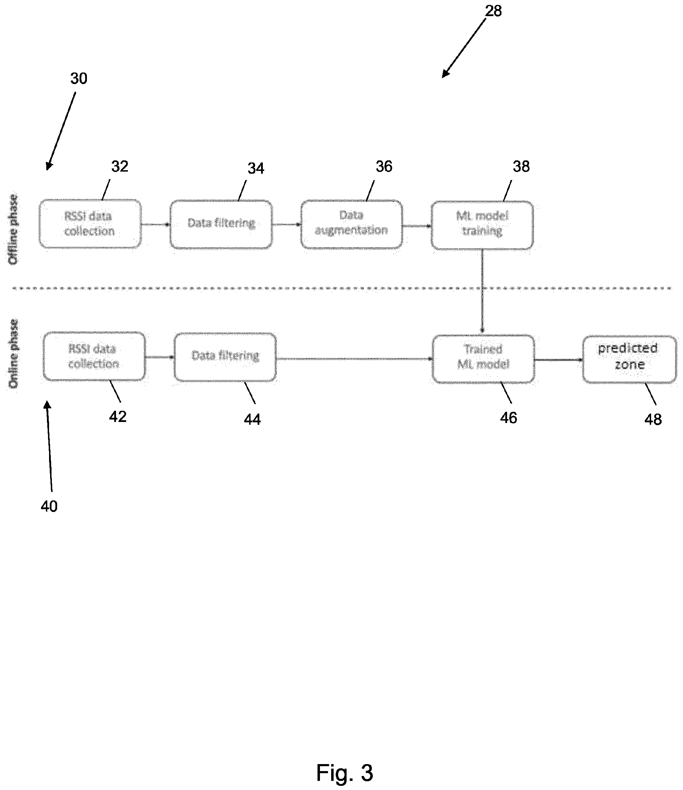

In particular, methods for locating a required asset in an environment may comprise two phases, as shown in localization framework 28 of Figure 3. Framework 28 includes an offline phase 30 and an online phase 40. The offline phase 30 may be performed in advance of the online phase 40.

In the offline phase 30, a fingerprint database containing an RSSI signature for each zone may be generated in a RSSI data collection step 32. The data in the fingerprint database collected at data collection step 32 may be filtered in a data filtering step 34, in order to reduce noise. The data may be augmented in a data augmentation step 36, in order to reduce the fingerprinting duration. Then, a machine learning model may be trained in a ML model training step 38, using the (filtered and augmented) data.

In the online phase 40, when a real-time stream of scanned RSSI values may be received from each receiver 14 (e.g., at RSSI data collection step 42), the trained machine learning model may be used, with the real-time RSSI value stream, to predict a zone in the environment in which the required asset is located (see e.g., steps 46 and 48 of Figure 3). Prior to inputting the real-time stream of scanned RSSI values received at the RSSI data collection step 42, into the trained machine learning model at step 406, the online stage 40 may include a data filtering step 44, to reduce noise. This data filtering step 44 of the online phase 40 may include the same data processing performed during the offline phase 30, as described below.

The trained machine learning model may therefore generate a prediction of a most likely zone for the location of each tag that is advertising / broadcasting signals in the environment.

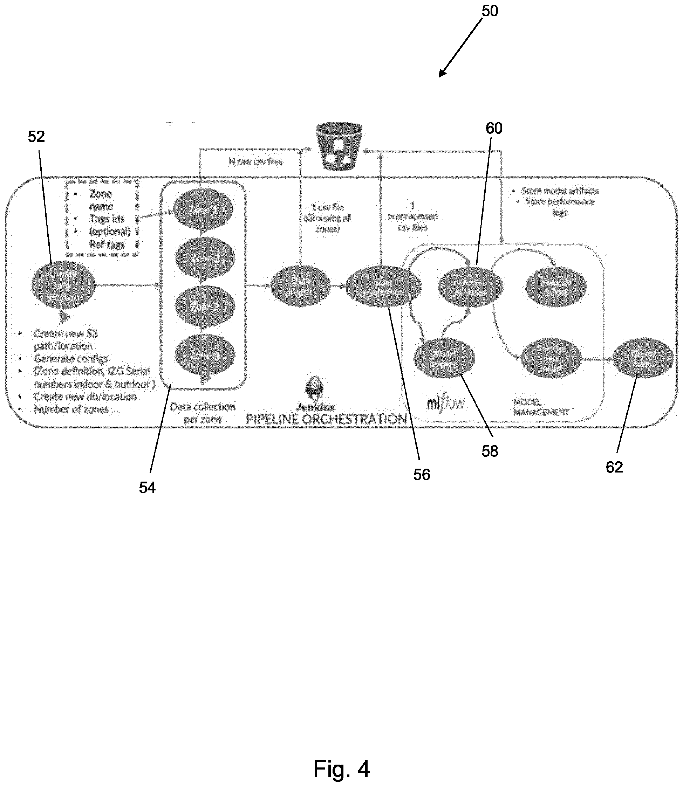

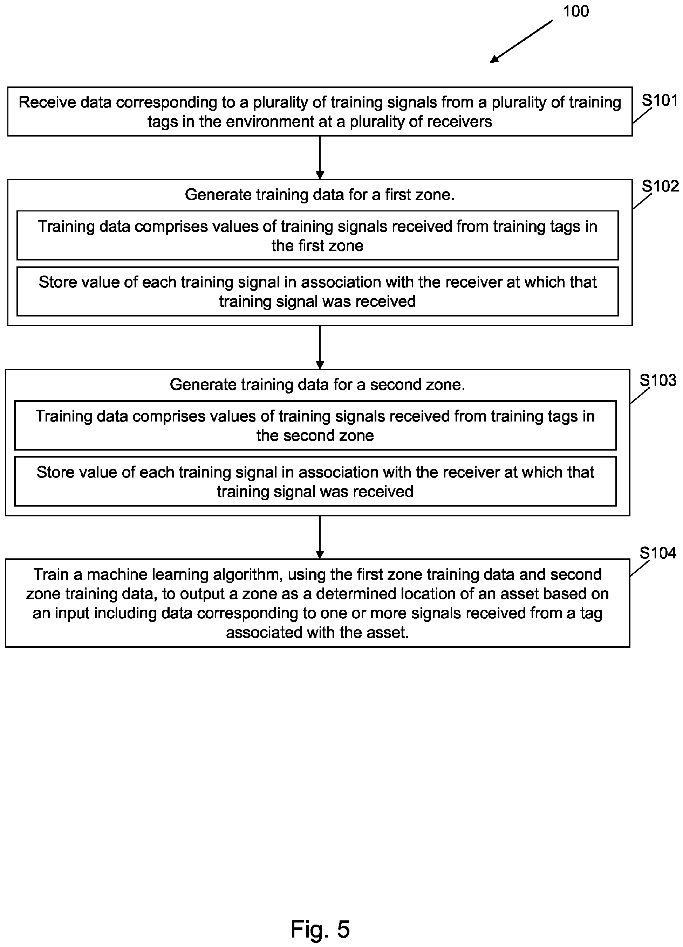

An example offline phase 40 is illustrated in further detail in Figure 4 which shows a machine learning model deployment pipeline 50. The steps of offline phase 40 are also set out in method 100 of Figure 5.

First, a new location is created/defined as an environment (see e.g., step 5 of Figure 4). In particular, if a user would like to locate an asset in a warehouse, the warehouse may be defined as the environment. For example, a definition of the environment may include whether the environment is an indoor/outdoor environment, dimensions of the environment and/or shape of the environment. This information may be stored at a server, such as external server 16 shown in Figures 1 and 2. A plurality of zones may be defined in the environment. These zones may have an equal area and/or shape for example. The plurality of zones may collectively cover the environment.

A plurality of receivers 14 may be deployed in the environment. Preferably, receivers are positioned in all zones, and are evenly spaced over the zones. An identifier and location of each receiver 14 may be stored, e.g., by scanning a QR code on the receiver to obtain a unique identifier. As a result, a dedicated database for each new location may be stored, including information related to the location and identification of the receivers 14 in the location and the defined zones in the location.

Next, in a data collection step (see e.g., step 32 of Figure 3, and step 54 of Fig. 4), data is collected for each zone in the environment. The receivers 14 may be switched to a data collection fast mode, for example. Data may be collected one zone at a time (e.g., sequentially). Alternatively, data may be collected in multiple zones simultaneously.

A plurality of training tags used for data collection may be positioned in the environment. The training tags may be BLE tags, for example. Information related to each training tag may be stored. This information may include a zone in which the training tag is located, information related to whether the training tag is indoors or outdoors, and/or a training tag identifier (e.g., a unique training tag serial number).

A plurality of training tags are positioned in one or more zones. They may be preferably evenly spaced over each respective zone. In these examples, there may not necessarily be the same number of training tags in each zone, but the plurality of training tags in each zone may be evenly spaced over that zone. Alternatively, there may be the same or similar number of training tags in each zone. The plurality of training tags may be evenly spaced over all of the zones.

After deployment in the one or more zones, the training tags 14 may be stationary in the zone(s) during the data collection step.

Data collection may then begin. The duration of the data collection may be predefined. The data collection duration may depend on a reporting interval of the receivers. In some examples, the predefined duration of data collection may be approximately 5 minutes per zone. This may be sufficient for receiver reporting scanned training tags every 10 seconds (wherein the reporting interval of the receivers = scanning interval + a communication delay). For example, the scanning interval may be approximately 8 seconds, a communication delay may be approximately 2 seconds, and a training tag may advertise/broadcast every 3 seconds.

For every approximately 5 minutes of data collection, each training tag may generate approximately 30 raw datapoints for each receiver 14 that scanned the training tag. Approximately 1000-1200 raw datapoints may be generated per zone for each receiver that scanned training tags.

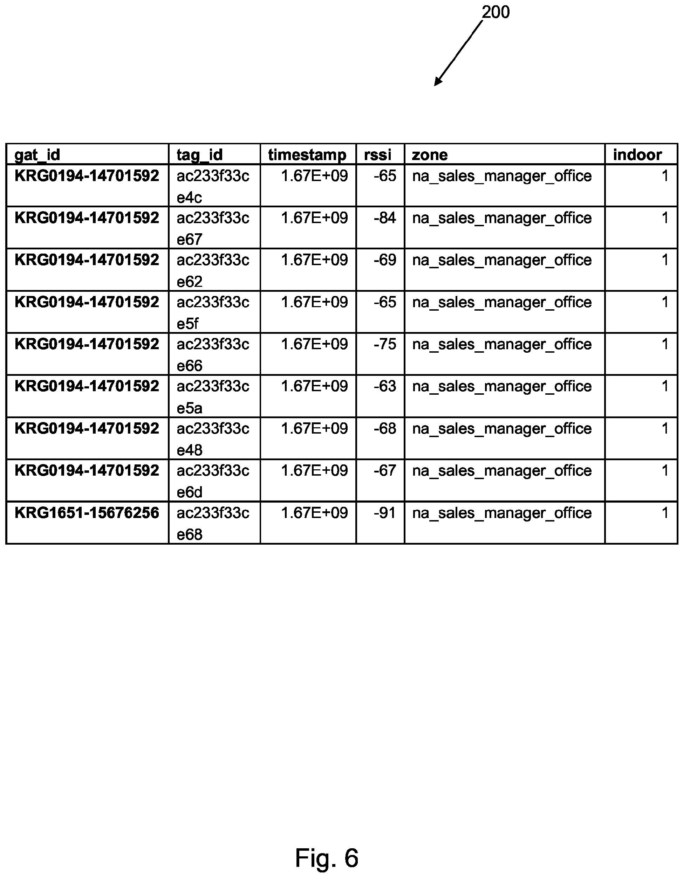

The raw datapoints for each zone may be stored e.g,, in a csv. file. An example portion of such a csv. file 200 is shown in Figure 6. As shown in Figure 6, when a training signal is received from a training tag at a receiver, a receiver unique identifier ("gat_id"), can be stored in connection with a training tag unique identifier ("tag_id"), an RSSI value ("rssi"), and a zone identifier ("zone").A time of receipt of the training signal at the receiver ("timestamp") and indication of whether the zone is inside or outside ("indoor") may also be stored. These raw datapoints may be stored at a server external to the environment, for example.

Accordingly, during the data collection step 32, 54, a plurality of training signals from a plurality of training tags in the environment are received at a plurality of receivers in the environment. Each training signal may include information identifying a training tag from which the training signal was sent. Data corresponding to the plurality of training signals may be received (see e.g., S101 of Figure 5), e.g., at one or more processors. The one or more processors may be located at one or more of the receivers, internally to the environment and/or externally to the environment. The one or more processors may determine an RSSI value of each training signal received.

Training data may then be generated for each of the plurality of zones. The training data may be generated at the one or more processors. For example, the training data for a first zone may be generated at a first one or more receiver, and the training data for a second zone may be generated at a second one or more receiver.

For example, for a first zone of the plurality of zones, training data may be generated which comprises RSSI values of training signals received from training tags in the first zone (see e.g., S102 of Figure 5). It may be determined that the training tag is located in the first zone based on the information identifying the training tag from which the training signal was sent (e.g., a tag identifier), and stored information indicating a zone in which that training tag is located. The RSSI value may be stored in association with the receiver which received the training signal, as shown in Figure 6.

For a second zone of the plurality of zones, training data may be generated which comprises RSSI values of training signals received from training tags in the second zone (see e.g., S103 of Figure 5). It may be determined that the training tag is located in the second zone based on the information identifying the training tag from which the training signal was sent (e.g., a tag identifier), and stored information indicating a zone in which that training tag is located. The RSSI value may be stored in association with the receiver which received the training signal, as shown in Figure 6.

The training data may be stored for each of the plurality of zones in the environment in a corresponding manner.

A list of sanity checks may then be executed, e.g., by the one or more processors, to validate the data quality, e.g., correctness and consistency of the data,

When the data collection is completed for all zones in the environment, a machine learning pipeline, which includes a data preparation and augmentation step (see e.g., step 56 in Figure 4), a model training step (see e.g., step 58 in Figure 4), a model validation step (see e.g., step 60 in Figure 4) and a model deployment step (see e.g., step 62 in Figure 4). This machine learning pipeline may be deployed automatically after the data sanity check, for example.

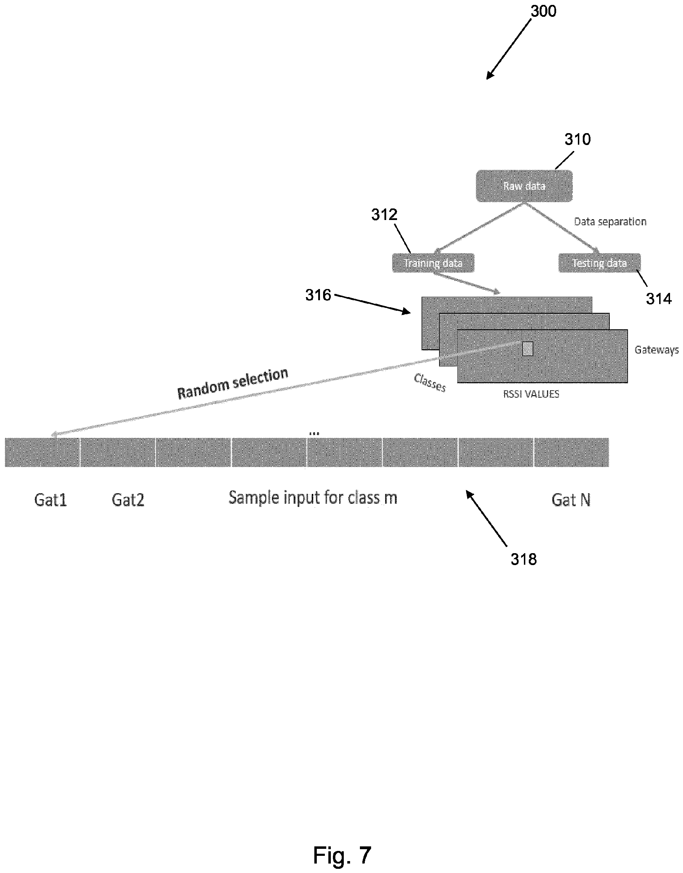

The raw data 310 may be split into a training set 312 and a testing set 314 (see e.g., data preparation process 300 shown in Figure 7). The training set may comprise a majority of the training data. For example, the training set may comprise the training data for approximately 80% of the training tags, and the testing set may comprise the training data for the remaining approximately 20% of the training tags.

In a data preparation and augmentation step, the raw data in the training set 312 may be transformed to a machine learning input, in a feature engineering process.

For this supervised machine learning, the features (e.g., the set of inputs that the model will rely on to distinguish between possible outputs) may be information about RSSI values received or scanned by the receivers, and the classes (e.g., the set of model outputs) may be the zones. In other words, the aim of training a machine learning model is to be able to input information about RSSI values received from a required tag at identified receivers into the trained machine learning model and for the trained machine learning model to output a predicted zone as a location of the required tag.

The feature engineering process may include constructing, for each pair of (receiver, zone), an array with all recorded RSSI values. A plurality of (receiver, zone) arrays 316 are shown in Fig. 7 ("gateways, classes").

Accordingly, a plurality of first zone arrays may be generated. The plurality of first zone arrays may include RSSI values of the training signals received from training tags located in the first zone. Each first zone array may include values of the training signals received from a different respective receiver of the plurality of receivers. Accordingly, a plurality of first zone arrays may be constructed, the data values in each first zone array corresponding to values of the training signals received from different receivers. For these first zone arrays, the different receivers which received the training signals may not necessarily be located in the first zone, but the training tags which transmitted the training signals are located in the first zone.

Similarly, a plurality of second zone arrays may be generated. The plurality of second zone arrays may include RSSI values of the training signals received from training tags located in the second zone. Each second zone array may include values of the training signals received from a different respective receiver of the plurality of receivers. Accordingly, a plurality of second zone arrays may be constructed, the data values in each second zone array corresponding to values of the training signals received from different receivers. For these second zone arrays, the different receivers which received the training signals may not necessarily be located in the second zone, but the training tags which transmitted the training signals are located in the second zone.

Similar arrays may be generated for each of the plurality of zones.

A minimum observed RSSI value may be appended if no data has been recorded for a pair of (receiver, zone). The minimum observed RSSI value may be -95 for example.

Accordingly, for the first zone arrays, if one of the receivers has not received any training signals from a training tag located in the first zone, a minimum observed value may be assigned to the first zone array corresponding to that receiver, Similarly, for the second zone arrays, if one of the receivers has not received any training signals from a training tag located in the second zone, a minimum observed value may be assigned to the second zone array corresponding to that receiver.

Each first zone array may include the RSSI values of all the training signal received from training tags located in the first zone at the respective receiver. Similarly, each second zone array may include the RSSI values from training tags located in the second zone at the respective receiver.

A fixed number of arrays corresponding to zones (for training and testing) can be generated, and thus the training set can be augmented. In particular, for each zone, an NX1 array 318 may be generated, wherein N equals the number of receivers (see e.g., Figure 7). Each value in the input may correspond to an RSSI value recorded at each receiver ("Gat1, Gat 2....Gat N" in Figure 7). The RSSI value for each receiver may be chosen randomly from the set of RSSI values given in a respective zone ("class m" in Fig. 7).

Accordingly, an Nx1 first zone array may be generated, wherein N is the number of receivers, and each value in the Nx1 first zone array is a value of a training signal received from a training tag located in the first zone at each different receiver. Each value in the Nx1 first zone array may be randomly selected from the values in the respective first zone array corresponding to the respective receiver. As such, the Nx1 first zone array may contain a single value of a training signal received from a training tag in the first zone, for each receiver.

Similarly, an Nx1 second zone array may be generated, wherein N is the number of receivers, and each value in the Nx1 second zone array is a value of a training signal received from a training tag located in the second zone at each different receiver. Each value in the Nx1 second zone array may be randomly selected from the values in the respective second zone array corresponding to the respective receiver. As such, the Nx1 second zone array may contain a single value of a training signal received from a training tag in the second zone, for each receiver.

A corresponding Nx1 "m" zone array may be generated for each zone.

A machine learning model is then trained using the first zone training data and second zone training data, to output a zone as a determined location of an asset based on an input including data corresponding to one or more signals received from a tag associated with the asset (see e.g., S104 of Figure 5).

In particular, the machine learning model may be trained using theNx1 zone arrays for each of the plurality of zones. A Support Vector Machine (SVM) with a radial basis function (RBF) may be trained using the Nx1 zone arrays. The SVM slack (C) may be tuned, e.g., by trial and error. The machine learning model may be tracked, and its hyperparameter, artifacts and performance logged/stored.

The trained machine learning model may then be tested using the testing set 314. The trained machine learning model may only pass the test and proceed in the process if the result of inputting the testing set 314 to the trained machine learning model meets a predefined criteria. Otherwise, the trained machine learning model may be retrained.

After the machine learning model is trained, the trained machine learning model may be validated in a validation step (see e.g., step 60 of Figure 4). In particular, the trained machine learning model may be validated if it is better than a previous machine learning model for the environment. If it is better, the previous machine learning model may be archived or discarded, and the trained machine learning model may be registered and deployed, e.g. on an external cloud server (see e.g., step 62 in Fig. 4). If the trained machine learning model is not better, the previous machine learning model may be maintained for the environment. An error may be generated if the maximum performance between the trained machine learning model and the previous machine learning model fails to meet a predefined threshold (e.g., <80% accuracy).

The deployed trained machine learning model may then be used to predict the zone location of a required asset in the environment. Returning to Figure 2, a tag 12 associated with the required asset may transmit signals, which may be received at a plurality of receivers 14 in the environment. RSSI values of these signals may be determined from the signal. The RSSI values, as well as information identifying the receivers at which the signals were received may be transmitted to a processor, e.g., an external cloud server 16, where the trained machine learning model may be stored. The RSSI values and the corresponding receiver identifiers may be input into the trained machine learning model, which, when executed on the external cloud server 16, may output a predicted zone in the environment as the location of the required asset in the environment.

For completeness, although the above methods are described as using RSSI values, other signals and other values of the signals may be used to train the machine learning model, and to predict a location of a required asset using the trained machine learning model. For example, the one or more signals may comprise visual waves (e.g. electromagnetic waves in the frequency range from approximately 400THz - 800THz), infrared waves (e.g., electromagnetic waves in the frequency range from approximately 300GHz - 400THz), and/or ultraviolet waves (e.g., electromagnetic waves in the frequency range from approximately 800THz - 30PHz).

Alternatively/additionally, the one or more signals may comprise pressure wave signals, such as sound wave signals.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A method for training a machine learning model for locating an asset in an environment when the machine learning model is executed on a computer system, the method comprising:
receiving data corresponding to a plurality of training signals, wherein the plurality of training signals are received at a plurality of receivers from a plurality of training tags located in the environment, the environment having a plurality of zones, and wherein each of the training tags is associated with a zone in which it is located;
generating training data for a first zone of the plurality of zones, wherein the training data for the first zone includes values of the training signals received from training tags located in the first zone, each value associated with the receiver at which a respective training signal was received;
generating training data for a second zone of the plurality of zones, wherein the training data for the second zone includes values of the training signals received from training tags located in the second zone, each value associated with the receiver at which a respective training signal was received; and
training, using the training data for the first zone and the training data for the second zone, a machine learning model to output a zone as a determined location of an asset in the environment based on an input which includes data corresponding to one or more signals received at one or more receivers from a tag associated with the asset.

2. The method of claim 1, wherein the data corresponding to the plurality of training signals comprises, for each training signal, the value of the training signal, information identifying the training tag from which the training signal was received, and information identifying the receiver at which the training signal was received.

3. The method of claim 1 or claim 2, wherein the values of the training signals are RSSI values.

4. The method of any preceding claim, wherein the training signals are received during a predefined scanning period.

5. The method of claim 4, wherein the training tags and/or the receivers are static within the environment for the duration of the predefined scanning period.

6. The method of any preceding claim, wherein the data corresponding to the training signals comprises a plurality of sets of data corresponding to training signals, each set comprising data corresponding to training signals received from a respective training tag at a respective receiver.

7. The method of claim 6, further comprising filtering the received data corresponding to the training signals, wherein filtering the received data corresponding to the training signals comprises:
selecting, from each set of data corresponding to the training signals, the data corresponding to the training signal with the maximum value in that set; and
discarding the data corresponding to the other training signals.

8. The method of any preceding claim, wherein multiple training tags are located in each zone of the plurality of zones, and the training tags in each zone are evenly spaced over the respective zones.

9. The method of any preceding claim, further comprising receiving, at the plurality of receivers, the plurality of training signals from the plurality of training tags located in the environment.

10. The method of any preceding claim, further comprising:
splitting the training data for the first and second zones into a training set and a testing set;
training the machine learning model using the training set; and
testing the trained machine learning model using the testing set.

11. The method of any preceding claim, wherein:
generating the training data for the first zone comprises generating a plurality of first zone arrays of the values of the training signals received from training tags located in the first zone, each first zone array including values of the training signals received from a different respective receiver; and
generating the training data for the second zone comprises generating a plurality of second zone arrays of the values of the training signals received from training tags located in the second zone, each second zone array including values of the training signals received from a different respective receiver.

12. The method of claim 11, wherein:
generating the training data for the first zone comprises, if one of the receivers has not received any training signals from a training tag located in the first zone, assigning a minimum observed value to the first zone array corresponding to that receiver; and
generating the training data for the second zone comprises, if one of the receivers has not received any training signals from a training tag located in the second zone, assigning a minimum observed value to the second zone array corresponding to that receiver.

13. The method of claim 9 or claim 10, wherein:
generating the training data for the first zone further comprises generating an Nx1 first zone array, , wherein N is the number of receivers, and each value in the Nx1 first zone array is a value of a training signal received from a training tag located in the first zone at each different receiver;
generating the training data for the second zone may further comprise generating an Nx1 second zone array, wherein N is the number of receivers, and each value in the Nx1 second zone array is a value of a training signal received from a training tag located in the second zone at each different receiver; and
the machine learning model is trained using the Nx1 first zone array and the Nx1 second zone array.

14. A system for training a machine learning model for locating an asset in an environment, the system comprising one or more processors, and memory storing thereon instructions that, as a result of being executed by the one or more processors, cause the system to perform the method of any of claims 1-13.

15. A method for locating an asset in an environment, the method comprising:
training a machine learning model according to the method of any of claims 1-13;
receiving data corresponding to one or more signals received at one or more receivers from a tag associated with the asset;
inputting the data corresponding to the one or more signals received from the tag into the trained machine learning model; and
determining, based on the output of the trained machine learning model, a zone in the environment as the determined location of the asset in the environment.
